# EUROPEAN PATENT APPLICATION

(11) **EP 2 784 737 A1**
(43) Date of publication of application: **01.10.2014**
(21) Application number: 14162264.7
(22) Date of filing: 28.03.2014
(51) Int. Cl.: G06Q 30/02

(54) **Systems and methods for utilizing micro-interaction events on computing devices to administer questions**

(30) Priority: 29.03.2013 US 201361806563 P; 27.03.2014 US 201414227094
(71) Applicant: L.S.Q. LLC, Birmingham 48009 (US)
(72) Inventor: Abowd, Gregory, Atlanta, 30345 (US); Han, Yi, Atlanta, 30308-0760 (US); Abowd, Peter, Birmingham, 48009 (US); Horner, Wesley, Pittsburgh, 15213 (US); Tengler, Steven, Grosse Pointe Park, 48230 (US); Chen, Junyu, Pittsburgh, 15219 (US)
(74) Representative: Schenk, Markus

(57) **Abstract**

Disclosed are systems and methods for facilitating the administration of questions to one or more intended responders. A grouping of questions is obtained. At least one graphical element is assigned to each of the questions within the grouping and a grouping of graphical elements is generated. Each of the graphical elements within the grouping of graphical elements is prioritized. In response to detection of a micro-interaction event the following steps are performed: a graphical element among the grouping of graphical elements having a highest priority is selected; the selected graphical element is presented on a display of the mobile computing device; a response is obtained based on manipulation of the displayed graphical element; metadata is generated according to the response; and the response and metadata are stored in a storage device within the mobile computing device.

## Description

### CROSS-REFERENCE TO RELATED APPLICATION

This application claims priority to, and the benefit of, U.S. Provisional Patent Application entitled, "Using the Unlock Interaction on Mobile Devices to Log Answers to Simple Questions," having Serial No. 61/806,563, filed on March 29, 2013, which is incorporated by reference in its entirety.

### TECHNICAL FIELD

The present disclosure generally relates to administering questions during micro-interaction events on computing devices.

### BACKGROUND

The most direct way to learn about people is to ask them questions, and one cost-effective way to accomplish this task is to administer questionnaires. As one example, consider market research. To learn the percentage of adults in the U.S. that owns a smartphone, the easiest way to acquire this information is to survey a sample of the population. This information is important for companies that need to form investment plans on smartphones. A survey is also a useful tool for the person answering the question. For example, if a patient with asthma visits a clinic, he or she will have to fill out a questionnaire about their recent symptoms so that their doctors can know how well the current medication is working. Without this information, the medical providers will not be able to accurately assess their condition.

However, a shortcoming of surveys is that they are often considered either too intrusive or too cumbersome. Asking people to fill out a simple questionnaire even with only a few questions can still disrupt the flow of their lives. This situation is not a big problem when people only need to answer the questions once in a while. Today, however, surveys frequently appear in different forms and fields such as continuous chronic care, technology evaluation, crowdsourcing, market research, self-monitoring, and so on. Surveys generate more value when delivered timely and frequently.

The process for creating and obtaining answers relies on specific expertise and mechanisms to transition from questions to answers. An expert begins by defining a survey, creating one or more questions of interest with each question being an instance of one of a number of question types. The questions are either closed or open, where closed questions each has a fixed set of possible responses, open questions allow responders to answer in a more free-form manner. Closed question types include multiple choice, yes/no, true/false, rank ordering, Likert scale, as well as other forms. Open questions involve opinion questions, clarifications on closed responses, or pictures or videos that demonstrate a requested piece of information. Open questions provide an individual, or responder, the opportunity to give a richer response, but require more effort by the expert who designed the question to analyze the results to draw conclusions across all responses.

Once questions are defined and designed, a pool of potential responders for the survey must be defined. This potential audience is contacted and invited to complete the survey, often with explicit incentives to encourage participation. Those responders who complete some or all of the survey are rewarded and the responses are collected for further analysis. What was a practice requiring paper to encode the survey and face-to-face contact to distribute and lots of manual labor to collate and analyze, has been transformed by the introduction of the postal service, telephone, and computers connected to the Internet. Each of these technologies introduce both opportunities and challenges to the existing practice of survey administration.

Today, the widespread use of mobile devices, particularly feature phones, smart phones, and mobile tablets provide both opportunities and challenges for survey administration. One current practice is online survey administration, where potential responders are reached through an electronic medium, such as e-mail. An e-mail invitation will typically contain a link to a survey that can be taken through a web browser. Since so many people own one or more of these mobile devices and can operate them throughout the day, it is common for the e-mail invitation to be read and the survey link to be followed on the mobile device. The challenge is that very few surveys were designed for mobile devices, where the user experience is different from the standard keyboard/mouse interaction with large display that defines a desktop or laptop experience. In addition, many surveys are designed assuming the responded is sitting at their desktop/laptop and will take 10-30 minutes to answer all questions in a single session. However, typical usage patterns on mobile devices are much different, tending to occur frequently but in shorter bursts throughout the day. As result, an inferior user experience, both in terms of physical interaction as well as time requirements, results in many responders on mobile devices abandoning a survey before completion, resulting in bad data and loss of operational revenue for experts who make their money by providing many answers to a client's questions. Simply put, surveys designed for the desktop/laptop online experience do not work well on mobile devices, and as adoption of mobile devices increases the pressure to change survey administration mounts. As a result, finding a less intrusive method to administer surveys could greatly motivate people in answering the questions.

### SUMMARY

Briefly described, one embodiment, among others, is a method implemented in a mobile computing device for facilitating administration of questions. The method comprises obtaining a grouping of questions, assigning at least one graphical element to each of the questions within the grouping and generating a grouping of graphical elements. The method further comprises prioritizing each of the graphical elements within the grouping of graphical elements. In response to detection of a micro-interaction event, the following steps are performed: a graphical element among the grouping of graphical elements having a highest priority is selected; the selected graphical element is presented on a display of the mobile computing device; a response is obtained based on manipulation of the displayed graphical element; metadata is generated according to the response; and the response and metadata are stored in a storage device within the mobile computing device.

Another embodiment is a question administration system that comprises a computing device and at least one application executable in the processor. The at least one application comprises logic that obtains a grouping of questions, logic that assigns at least one graphical element to each of the questions within the grouping and generating a grouping of graphical elements, and logic that prioritizes each of the graphical elements within the grouping of graphical elements. The at least one application further comprises logic that selects a graphical element among the grouping of graphical elements having a highest priority responsive to detection of a micro-interaction event, logic that displays the selected graphical element on a display of the mobile computing device responsive to detection of the micro-interaction event, logic that obtains a response based on manipulation of the displayed graphical element responsive to detection of the micro-interaction event, logic that generates metadata according to the response responsive to detection of the micro-interaction event, and logic that stores the response and metadata in a storage device within the mobile computing device responsive to detection of the micro-interaction event.

Another embodiment is a method implemented in a computing device for facilitating administration of questions. The method comprises generating a grouping of questions for an intended responder, the intended responder comprising a user of a mobile computing device. The method further comprises generating at least one graphical element for each of the questions within the grouping and generating a grouping of graphical elements. and assigning at least one trigger event to each of the graphical elements within the grouping of graphical elements, the at least one trigger event corresponding to a micro-interaction event.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 illustrates a question widget designed for presenting a binary choice comprising yes/no responses in accordance with various embodiments of the present disclosure.
FIG. 2 illustrates a question widget designed for presenting a binary choice between multimedia responses in accordance with various embodiments of the present disclosure.
FIG. 3 illustrates a question widget designed as a ratings scale question in accordance with various embodiments of the present disclosure.
FIG. 4 illustrates a question widget configured to display a question and where the options for answering are arranged above a horizontally aligned response region in accordance with various embodiments of the present disclosure.
FIG. 5 illustrates a question widget configured to support a card sorting exercise, in which the responder is asked to sort any of a number of textual or symbolic responses into response bins in accordance with various embodiments of the present disclosure.
FIG. 6 illustrates a question widget designed to support the responder indicating levels of preference or categorization within a textual or graphical description in accordance with various embodiments of the present disclosure
FIG. 7 illustrates a question widget designed to support an open-ended response from the responder, such as a picture, video or audio recording of, by or about the responder's current situation in accordance with various embodiments of the present disclosure.
FIG. 8 is a block diagram of an environment in which embodiments of a question administration system may be implemented in accordance with various embodiments of the present disclosure.
FIG. 9 illustrates various components of the question administration system of FIG. 8 in accordance with various embodiments of the present disclosure.
FIG. 10 illustrates the question widget selection process in accordance with various embodiments of the present disclosure.
FIG. 11 illustrates the logic flow from the time when a question widget has been initially identified as the next question widget to be presented to the responder to the presentation and interaction by the responder during an appropriate micro-interaction event in accordance with various embodiments of the present disclosure.
FIG. 12 illustrates a flowchart for an operating system specific question widget administration in accordance with various embodiments of the present disclosure.
FIG. 13 illustrates a flowchart for performing priority and contextual evaluation for a next question widget in the list of available question widgets to be presented to a responder in accordance with various embodiments of the present disclosure.
FIG. 14 illustrates third party app and question widgets interactions on a mobile device in accordance with various embodiments of the present disclosure.
FIG. 15 illustrates the scenario where the third party partner app is present on the mobile device but where the mobile app is not present on the mobile device in accordance with various embodiments of the present disclosure.
FIG. 16 illustrates an example of a tool embodied as a web-accessible interface for constructing surveys in accordance with various embodiments of the present disclosure.
FIG. 17 is a schematic diagram of a mobile computing device in which embodiments of the question administration techniques disclosed may be implemented.

### DETAILED DESCRIPTION

The user experience on a mobile device is very different than that on a desktop or laptop today in various ways. First, the physical interaction is different, both in terms of the screen size as well as the user's ability to interact with the device. The desktop/laptop screen is fairly large and high resolution, whereas a mobile device, particularly a smartphone, has a much smaller screen. Even though screen resolution (pixels per unit area) continue to increase, the physical size of the device remains small compared to the desktop/laptop, and that impacts legibility of text and images. Input to mobile devices is also different from that for a desktop/laptop, with the latter using a physical keyboard and a selection device (*e.g*., mouse, trackpad, touchpad, trackpoint) and the former relying on soft keyboards, a few physical buttons and a touchscreen that interprets multitouch gestures. Second, the timing and location of interaction with a mobile device is different from that with a desktop/laptop. Desktops are inherently stationary devices, whereas laptops are portable but tend to be used in situations when the user is in a fixed place for an extended period of time. Mobile devices, particularly a smartphone, offer many opportunities for interaction while on the move and are easily accessed throughout the day. In addition, the devices tend to support brief bursts of interaction (*e.g.*, checking a text message, traffic or weather conditions).

Various embodiments are disclosed for administering questions by leveraging micro-interaction events that occur while using mobile devices. An example of a micro-interaction event is when people unlock their phones. Typically, people unlock their phones many times during the course of the day. Readable at-a-glance questions for surveys are delivered on the lock screen to utilize this glancing moment. Upon reading the short questions, users utilize different unlock interactions to input their responses. Therefore, unlocking their phones while answering questions creates minimal intrusion to the workflow of the users.

In the context of this disclosure, a question refers to a request of a person to provide an answer based on their feelings or situation, while an answer is that person's response to the question. An asker is an individual or entity wishing to obtain answers to one or more questions from a responder, who provides the answers. For the purposes of this disclosure, a question widget is a specially designed user experience for presenting a question on a mobile device to be answered by a responder, who is most likely, but not necessarily, the owner of that mobile device.

A question widget represents a tailored user experience optimized for presentation and interaction on a mobile device, accounting for the screen, sensing, multi-touch and multimedia capabilities of that platform. Question widgets are designed to be an efficient means of communicating different question types through the unique user interface modalities of a mobile device. Question widgets also gather explicit answers (including no response) from the responder through simple and intuitive input gestures as well as implicit information based on additional information available to the mobile platform through sensed phenomena (*e.g*., location, accelerometry) or responder profile (*e.g*., responder name or other historical data).

The questions portrayed by a question widget can be embodied in a variety of formats, including closed questions, in which there are a pre-defined set of potential answers, and open questions, in which the potential answer is not pre-defined but left to the responder. For purposes of this disclosure, a survey refers to a set of one of more question widget-based questions intended to be presented to a set of one or more potential responders who will answer the questions directly by interacting with the question widgets on a mobile device. Responses to a survey are stored by the mobile device for use either on the device itself or to be communicated from the device to another device for further analysis, such as to compare one responder's answers to those of other responders.

For various embodiments, question widgets facilitate how questions are presented and answered on a mobile device. To address when questions are presented on the mobile device, "micro-interactions events" are utilized, where a micro-interaction moment refers to brief periods of interaction opportunities between the mobile device and the owner or operator of that device. Specifically, a micro-interaction moment generally refers to a brief period of time when a mobile device owner has elected to attend to the mobile device but is not busy doing something else on the device. For example, when the mobile device owner turns on the screen to open up an application (app) on the smartphone, there is a brief period of time when the owner must unlock the device, typically by performing some gesture on the screen of the device. That moment of interaction with the mobile device is an example of a micro-interaction, and its occurrence is referred to as a micro-interaction event. Embodiments are described for presenting a question widget on the mobile device to a user during this lock screen micro-interaction event, thereby allowing the gesture that was intended to unlock the device to now be used to provide an answer to a short, closed or open survey question.

This lock screen micro-interaction event is an example of a platform-specific micro-interaction event and generally requires control at the device operating system level in order to administer a question widget during that micro-interaction. Other platform-specific micro-interaction events include, but are not limited to, entering and exiting an app on the device. Micro-interaction events can also be app-specific, where examples include hanging up from a phone call or moving from one level of a game to another level. App-specific micro-interaction events require coordination between the application to announce the occasion of a micro-interaction moment, and some service on the mobile device that allows for connecting micro-interaction events to question widgets to be presented.

Micro-interaction events define times when the user is available to the device but where the user might not be occupied with performing any particularly demanding task. For example, when a user takes a smartphone out of a pocket and presses a button on the smartphone to turn on the display, the user often has to perform some simple gesture or action on the device in order to continue interaction. This functionality is designed explicitly into smartphones in order to prevent unintended interaction with the device (*e.g.*, while it is in the pocket or purse). The gesture or action that the user performs to unlock the device is an example of a micro-interaction event. For a brief period of time, the user performs a simple interaction with the mobile device.

In the case of the unlocking micro-interaction event, the user typically is not paying much attention to the device and performs a somewhat mechanical and rote interaction to unlock the phone. Another example of a micro-interaction event is when a user exits from an app on a mobile device and the device transitions from the app to another state, such as the home screen or other state defined by the operating system of the mobile device. Conversely, entering an app is another micro-interaction event. These micro-interaction events are based on the functioning of the mobile device (*e.g.*, turning on the device, entering exiting any app on the device) as platform-defined micro-interaction events.

Micro-interaction events may also be app-specific where such micro-interaction events occur within the functioning of the app on the mobile device. For example, one standard app on a smartphone is the phone function itself. When a user hangs up from a call, the period between hanging up and performing the next operation in the phone app presents a micro-interaction opportunity. There are an unlimited number of app-specific micro-interaction opportunities that can be leveraged by the invention to determine brief moments of time when a mobile device owner or operator is available to do additional work.

The key relationship between micro-interaction events and question widgets is that a question widget is designed to be presented during the brief micro-interaction event. Presenting a single question in a way that can be understood and responded to without requiring too much time of the responder is important to gathering relevant responses to a wide variety of questions. A question widget is designed to be presented during one of a plurality of micro-interaction events and contextual information on the device is used to determine the best question widget to present to a potential responder for a given micro-interaction event.

Individuals with mobile devices will interact with those devices in a number of different and interesting situations. Modern mobile devices have significant sensing and computational power to help determine information about those situations. In this disclosure, information about the status or situation of a mobile device, and by proxy its owner, is referred to herein as context. For various embodiments, contextual information is used to define parameters of a question widget appearance and content, set the priority of a collection of question widgets to determine which question widget will be presented during a specific micro-interaction event, and to add additional metadata to the explicit answer provided by the responder based on information that the asker requires or that the system is collecting. Some examples of contextual information include, but are not limited to time, absolute or relative location information, the responder's past, present and future activities (which may be inferred from calendar entries, sensor data collected on the device or other means), physiological measurements of the responder, or historical usage data by the responder relative to apps on the device or through profiles recorded by the asker relating to the responder's past behavior.

A detailed discussion is now provided relating to various aspects for administering questions: defining question widgets as mobile device-optimized question-answer interactions; the development of a set of question widgets as a survey that can be deployed to a large number of potential responder mobile devices; the administration of the survey on the mobile devices that determines the best time to present an individual question widget to the responder during an appropriate micro-interaction event; the collection of an explicit response provided by the responder through the question widget as well as implicit data gathered on the device in connection with the response; and the storage and potential transmission of the set of responses for further analysis.

### Defining Question Widgets as Mobile Device-Optimized Question-Answer Interactions

As discussed earlier, a question widget, or question widget, is a specially designed user experience that provides a way to present a variety of question types to a potential responder on the mobile device. The question administration system takes into account the physical interaction properties of the mobile device to both present the question and obtain an answer from the responder. Question widgets support a wide variety of question types. Examples of question widgets for supporting closed questions (with a predefined set of responses) include, but are not limited to: a binary choice between two textual responses; a binary choice between multimedia responses; multiple choice between three or more textual or multimedia responses; card sorting amongst "n" textual or multimedia options; selection of a portion of an image from the overall image; or highlighting a substring of text from a longer textual passage. Examples of question widgets to support open-ended responses include, but are not limited to: recording an audio response to a question; providing a picture from a live scene in response to a question; recording a video from a live scene in response to a question.

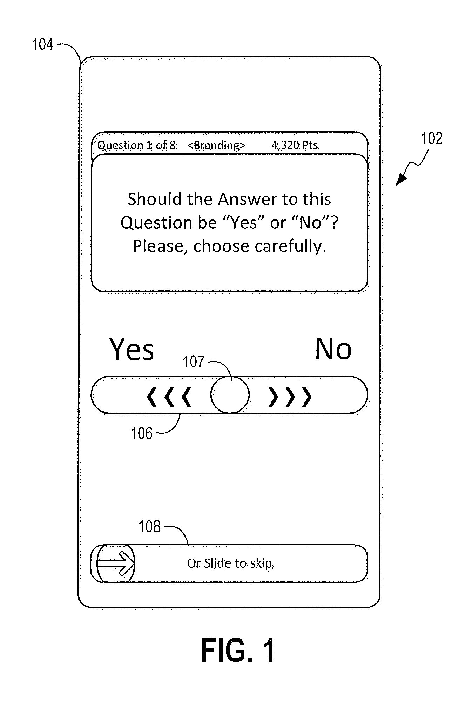

To further illustrate the concept of question widgets, reference is made to the following figures, which depict different embodiments of question widgets. FIG. 1 shows a particular embodiment of a question widget 102 intended for the display of a mobile computing device 104 such as a smartphone, where the question widget 102 presents a binary choice of a yes or no response to a textual question. At the appropriate micro-interaction event, this question widget 102 is displayed, presenting an easy to read question to the responder. The options for answering the question are presented beneath the question along a horizontal path, or response region 106. On one end of the response region 106 is the label "Yes", and on the other end is the label "No". A circular control object 107 sits in the middle of the response region between the "Yes" and "No" options.

Upon reading the question, the responder decides on the appropriate response and can then signal that response to the question widget by simply placing a finger or thumb on the touchscreen over the circular control object and dragging (all the while maintaining contact with the touchscreen) the control object 107 to the left (to indicate "Yes") or to the right (to indicate "No") and releasing or lifting up the finger or thumb to explicitly indicate the answer to the question. Upon release, the response to the question widget question is recorded along with any other implicit contextual information the asker requires or that the system is collecting (*e.g*., time of response, location of response). The question widget 102 then disappears from the display and interaction with the mobile device 104 resumes as normal. An important feature of the question widget design is the always-available option to the user to not provide an answer. At the bottom of the question widget in FIG. 1 is an additional horizontal path, with an object 108 (labeled with a right-pointing arrow) that can alternatively be touched by the responder's finger or thumb and dragged to the right. Once the object 108 is dragged all the way to the end of the horizontal path (labeled with the text "Or slide to skip" to suggest to the responder its meaning) and released, the question widget records "No response" as the explicit choice of the responder, along with any other implicit contextual information the asker requires or that the system is collecting.

This non-limiting example of a question widget design and interaction shows that any given question widget type (*e.g*., binary yes/no) can be parameterized to suit a variety of situations. In the example of FIG. 1, the text of the question itself is a parameter, the size and font of the question are parameters, and whether or not to provide the skip option is a parameter. The visual appearance of the control object 107 can vary, as well as the orientation (horizontal, vertical or diagonal) of the required movement of the control object to one or the other answers. The movement could also be in the form of a "V" shape with the control object starting at the vertex, or point, of the "V" and the answers being at the ends of the "V". The "V" could be oriented in any of a variety of ways. The gesture used to move the control object to the desired choice can also vary. Instead of a dragging movement on the response region or the skip region, a fling gesture (also called a flick) could be accepted, wherein the responder touches the control object and pushes it in the direction of the desired response (or skip) without having to maintain contact. This particular embodiment also shows an important design consideration for a question widget, and that is providing the responder the opportunity to give an explicit response using only a single, multi-touch gesture. While this is not a requirement of a question widget, it provides the advantage of requiring less time for the responder, increasing the likelihood of gathering a response.

The interaction described above comprises a gesture movement by the responder that coincides with the orientation of the response region (horizontal direction in FIG. 1). Note that this does not have to be the only way the responder can move the finger or thumb. For some embodiments, it is also possible for the responder's physical gesture to wander outside the visible region outlining the response region and for that movement to be interpreted as a projection onto the response region (or the skip region).

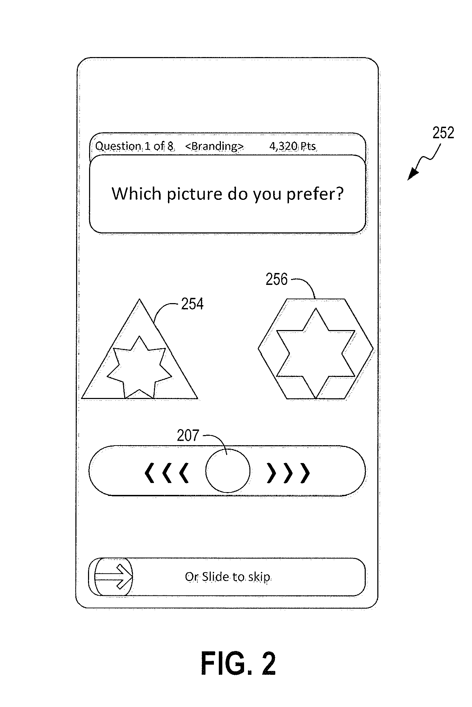

In another embodiment of a question widget design, a binary choice between multimedia responses is presented to the responder, as shown in FIG. 2. This question widget 252 is designed to gather information on a preference of the responder to one of two presented images 254, 256. The two images 254, 256 are presented side by side and the user selects which image is preferred by dragging the circular control object 207 to one end of the horizontal path towards the preferred image, or by flinging or flicking it towards the preferred image.

Upon release of the finger/thumb on the touchscreen (or when the control object reaches the circumference as result of a flick or fling), the preferred image (which is highlighted as the user drags the circular object 207 towards its side of the screen) is interpreted as the explicit response, along with any other implicit contextual information the asker requires or that the system is collecting. In addition to presenting static images, the question widget design may also present different multimedia options side by side, for example, comparing video and/or audio samples. In the case of these dynamic multimedia options (video or sound), this disclosure contemplates how to present the options. For example, videos can be simultaneously played side by side, requiring no responder effort to see the videos. Alternatively, the responder can separately perform an action on the interface to play the video or audio clips, either simultaneously or one after the other, before making an explicit response in favor of one or the other.

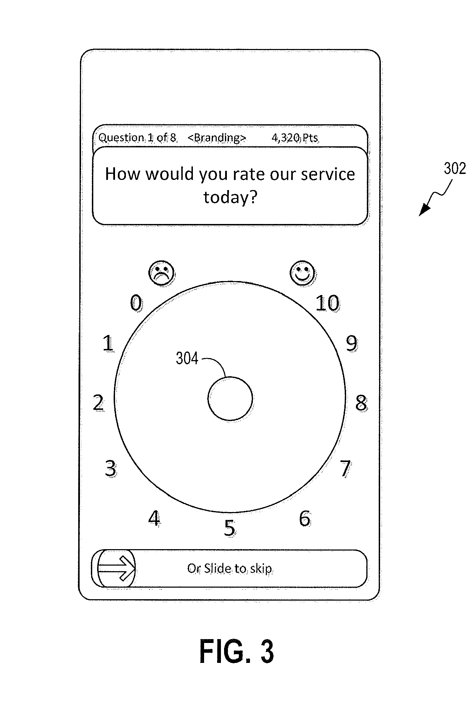

In yet another embodiment, a question widget can be designed to support a question with multiple short answers. FIG. 3 shows an example of a question widget 302 embodied as a ratings scale question. This is one example of a question that has a number of (3 or more) possible short answers. The responder is asked a question, in this case "How would you rate our service today?" and the options arranged along the circumference of a circle, representing a range of responses along a discrete scale from 0 (representing the most negative impression and accompanied by a frowning face icon) to 10 (representing the most positive impression and accompanied by a smiling face icon). A circular control object 304 in the middle of the circle can be selected by touch and moved in a single dragging gesture (or flicking or flinging gesture) to the circumference towards the desired response.

Upon release of the finger when near the circle (or when the control object 304 reaches the circumference as result of a flick or fling), the numeric value closest to the circular control object 304 (which can optionally be highlighted as direct feedback to the responder) is provided as the explicit answer along with any other implicit contextual information the asker requires or that the system is collecting. The number of answer options can vary beyond what is depicted in FIG. 3, as well as the geometry of the arrangement (e.g., a triangle, square, polygon, ellipse, etc.) and the appearance of the control object. The short answers can be numbers, as shown in FIG. 3, or other arbitrary symbols or images (*e.g*., icons of facial images representing mood) or numeric ranges (*e*.*g*., "0-2", "3-5", "5+") or strings (*e.g*., "Strongly agree", "Agree", "Neutral", "Disagree", "Strongly Disagree").

In yet another embodiment, a question widget can be designed to support a question like what has been described in the previous paragraph, but allowing for continuous ranges of numeric values between the displayed discrete values. For example, for this kind of question widget that would look similar to the question widget in FIG. 3, dragging the circular control object 304 to a location between "2" and "3" could result in a value between 2 and 3 being provided as the explicit answer (*e.g.*, 2.45), along with any other implicit contextual information the asker requires or that the system is collecting.

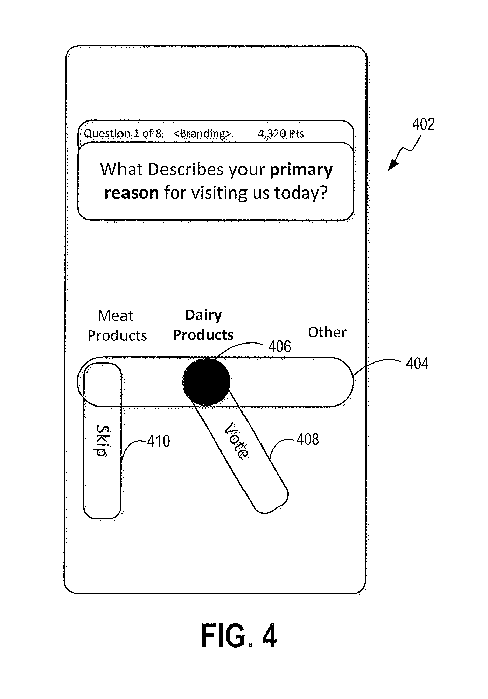

In yet another embodiment, a question widget can be designed to support a choice among multiple longer textual responses. In FIG. 4, the question widget 402 displays a question and the options for answering are arranged above a horizontally aligned response region 404 (indicated by the elongated oval in FIG. 4). In this embodiment, the control object 406 starts in the middle of the response region 404 (or any other pre-defined location along the response region 404). When the responder touches the control object 406 and slides along the response region 404, the answer closest to the control object is highlighted, and may be expanded to show more information to the responder about that answer. As the control object 406 is moved along the response region 404, an additional region 408 follows the control object and is shown in FIG. 4 as an elongated oval with the label "vote" on it.

To select the currently highlighted answer as the explicit response to the question, the responder keeps contact with the touchscreen and moves the control object down and to the right along the path labeled "vote". After the control object has passed a pre-determined distance along the path labeled "vote" and the responder lifts the finger or thumb performing the gesture, the current answer that was highlighted is stored as the responder's explicit answer to the question, along with any other implicit contextual information the asker requires or that the system is collecting. If the responder chooses to skip the question widget's question, the control object 406 can be moved to the left end of the response region 404 (or to some pre-defined location along the response region 404) and then down along another response region 410 labeled "skip" in FIG. 4.

After the control object 406 has passed a pre-determined distance along the path labeled "skip" and the responder lifts the finger or thumb off the control object, the system records that no answer was provided for that question widget, along with any other implicit contextual information the asker requires or that the system is collecting. The response regions 404, 408, 410 can be oriented in a variety of ways (e.g., horizontal, vertical or diagonal) and can even be arranged as a nonlinear path (e.g., a smooth curve or a zigzag) across the device screen with possible answers appearing anywhere along the path with the vote or skip options clearly indicated as deviations from the main response region 404 path.

If the answers are too long to be visible at all times, then an abbreviated form of the answer (textual or symbolic) can appear at all times and be expanded to the full answer when the control object is nearest to that answer. The determination of what is the nearest potential answer is based on any of a number of possible distance functions between the region of the screen occupied by the control object 406 and the region of the screen occupied by the abbreviated form of the answer.

In yet another embodiment, a question widget can be designed to support a choice among multiple textual or symbolic responses that are arranged along or near the perimeter of a region (*e.g*., a circle or polygon). After viewing the question, the responder can use a multi-touch gesture to "grasp" the region and rotate it clockwise or counterclockwise. By doing the rotation, the responder will move the answers along with the region, each answer remaining fixed to the same portion of the rotating region. A particular location on the screen is used to highlight the currently selected answer, so that when the responder ends the multi-touch gesture by removing fingers/thumb from the screen, the currently selected answer is stored as the responder's explicit answer to the question, along with any other implicit contextual information the asker requires or that the system is collecting. If any of the individual textual or symbolic responses are too large to be displayed continuously on the screen, they can be represented by an alternative and smaller textual or symbolic abbreviation except when that response is the currently selected or highlighted response.

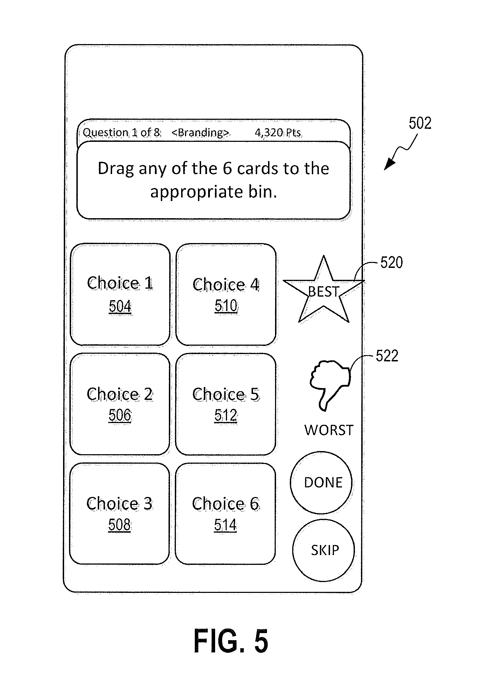

In yet another embodiment, FIG. 5 shows an embodiment of a question widget 502 designed to support a card sorting exercise, in which the responder is asked to sort any of a number of textual or symbolic responses into response bins. As shown in FIG. 5, a question or directive is presented to the responder along with a number of textual or symbolic options 504, 506, 508, 510, 512, 514 and one or more category bins 520, 522 to sort the options 504, 506, 508, 510, 512, 514 into. The responder selects and drags any subset of the options 504, 506, 508, 510, 512, 514 into one of the bins 520, 522. This can be done by the responder selecting a single option and continuously dragging that option to the region depicted by the appropriate category label, followed by releasing the selected option while still positioned over the category label. That option is then no longer visible on the screen. Alternatively, the responder can select one option and then drag that option with a continuous gesture over another option, thus adding that option to a set of options 504, 506, 508, 510, 512, 514 that can be simultaneously sorted into the same category bin 520, 522. The responder can continue to add options 504, 506, 508, 510, 512, 514 to the set of selected options as described above before finally dragging the whole set of selected options to a single category label and releasing them.

The responder can continue to sort the remaining options 504, 506, 508, 510, 512, 514 individually or as subsets into any of the categories until indicating the completion of the sorting activity by tapping on the "Done" button on the screen. The responder need not categorize all options 504, 506, 508, 510, 512, 514 that are initially presented. Upon completion, the system stores the explicit response from the responder as the mapping of options to category labels, along with any other implicit contextual information the asker requires or that the system is collecting.

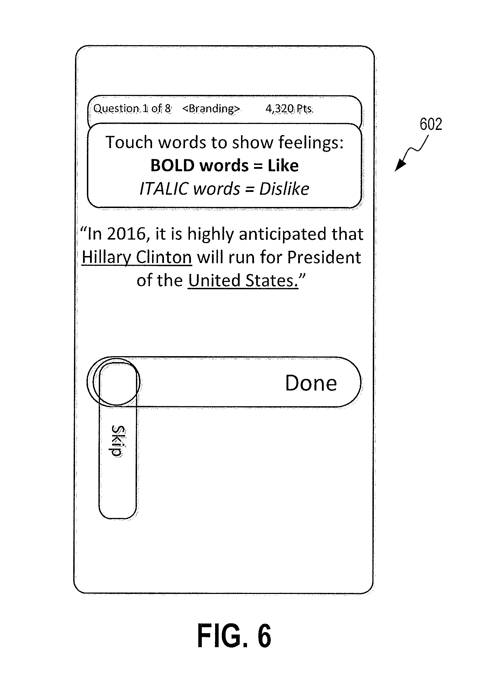

In yet another embodiment, FIG. 6 shows a question widget 602 designed to support the responder indicating levels of preference or categorization within a textual or graphical description. Specifically, FIG. 6 shows a question widget 602 with a textual description shown in quotation marks. For some embodiments, the question widget 602 is color-coded and the textual description is displayed in a single font color. The responder is given instructions above the textual description to" touch words to green" to indicate liking that part of the description and to "touch words to red" to indicate disliking that part of the description. The textual description is divided into words, delineated by spaces between consecutive characters.

When the responder touches or taps the area near a word, that word is initially turned to a particular (*e.g*., green), indicating a "like" reaction by the responder. The responder can keep contact with the screen and drag along the textual description in any direction to include other words in this same green/like categorization. Once a part of the textual description has been turned to green/like, an additional tap anywhere near that part of the textual description will turn the whole green subset of the textual description to another color (e.g., red), indicating a "dislike" reaction by the responder. Tapping anywhere near a red region of the textual description will turn the whole red region back to the original font color, indicating no preference by the responder.

Any number of non-contiguous and non-overlapping subsets of the original textual description can be given a color/preference. The responder indicates the completion of the categorization by selecting the circular control object at the bottom of the screen and dragging it towards the "done" label to the right and lifting up on the control object (or by flinging or flicking the control object in the direction of the "done" label), indicating completion of the response. Upon completion, the system stores the explicit response from the responder as the mapping of each word in the original textual description to the category labels of like or dislike, along with any other implicit contextual information the asker requires or that the system is collecting.

At any point, the responder can select the circular control object and slide it towards the skip label on the display and release it (or fling/flick it in that direction). In that case, the question widget will store a "no response" from the responder, along with any other implicit contextual information the asker requires or that the system is collecting. This question widget can support more than two category labels as long as there is an implemented ordering for the responder to cycle from one category to the next and back to no category. The determination of what is the nearest part of the textual description is based on any of a number of possible distance functions between the region of the display occupied by the responder's finger and the region of the display occupied by each word in the textual description.

The font characteristic can include color change and/or other features, such as bold or italics as long as there is a visual distinction made clear in the instructions and reflected in the text as the responder interacts. This same preference or categorization task can be performed on an image. The image is broken up into non-overlapping pieces that cover the entire image. For example, a grid can be superimposed over the image. The responder then taps on a given grid or piece of the image to indicate preference, in much the same way as was described for the textual description.

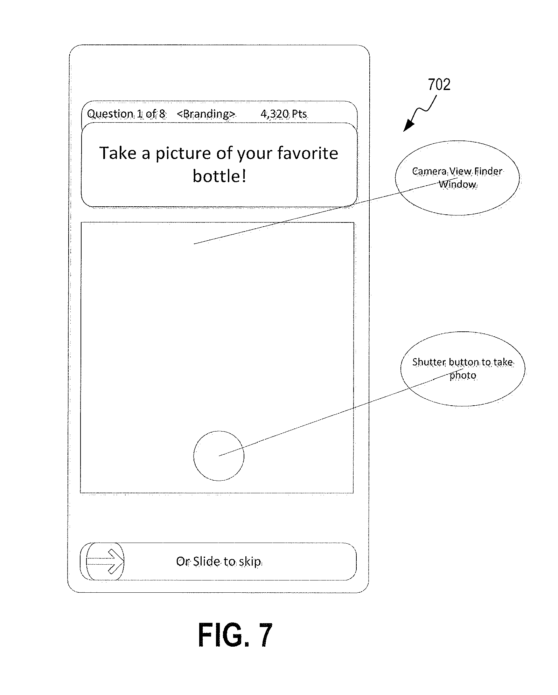

In yet another embodiment, FIG. 7 shows a question widget 702 designed to support an open-ended response from the responder, such as a picture, video or audio recording of, by or about the responder's current situation. In FIG. 7, a question widget 702 is displayed that asks the responder to take a picture of a favorite item. The question widget 702 also presents a live view of the mobile device's currently active camera, which a responder can determine because as the device moves, so does the image in the camera's viewfinder change.

If the device has more than one camera, the user is allowed to switch which camera to use. When the responder has visible in the camera viewfinder on the device display the desired picture, tapping on the camera icon at the base of the viewfinder will resulting in storing the current viewfinder image as the responder's explicit response, along with any other implicit contextual information the asker requires or that the system is collecting. At any point, the responder can skip this question by utilizing the skip interaction at the bottom of the display, as previously described.

It should be emphasized that the question widget embodiments, as well as all other mobile device-specific question widgets not explicitly defined in this disclosure, can be understood as representing examples of question types to be presented to a responder. Each question widget has a number of contextual parameters that can be defined to determine a single question widget's behavior, both in terms of how it is presented to the responder, when it is presented, and what data is collected by the question widget to be reported back to the asker.

For various embodiments, contextual parameters are set by an asker to define the behavior of a question widget. The contextual parameters may include but are not limited to the following: the scheduled calendar date and time of day to present the question widget to the responder, and the actual calendar date and time of day the responder attempted to and/or completed the interaction with the question widget; one or more specific times, or ranges of time during a 24-hour day to present, or not present, the question widget to the responder and the specific time of day the responder attempts to and/or completes the interaction with the question widget; the desired relative position or change of position of the responder to a gross geographical location or range of contiguous or disparate locations (geographic area) to present the question widget and the actual geographical location of the responder when interaction with the question widget was attempted and/or completed; a proximity identifier which indicates a specific entity should be nearby (within some pre-defined geographic distance) the responder when presenting the question widget and should be nearby also when interaction is completed by the responder; physiological constraints that a responder must meet to be presented with the question widget and the physiological conditions of the responder when attempting to, or completing the interaction with the question widget; and a specific or generalized behavior of the responder (e.g., entering/exiting a region, approaching/departing an entity, behavior of purchasing a product based on UPC code or similar identification, running for 20 minutes, having responded to previous question widgets, utilized SMS recently, Just completed a phone call, just used an app etc.) that would cause the presentation of the question widget and verification of the behavior at completion of the responders' interaction with the question widget.

A variety of contextual data not specifically identified by the asker can also be collected about the user experience with a question widget. These contextual parameters include, but are not limited to the following:
- First Created Time Stamp: the time in which the instance question widget is first created on the mobile device;
- First Visible Time Stamp: the time when the question widget was first presented to the responder;
- First Touch Time Stamp: the time recorded when responder first makes contact with the display area controlled by or within the interaction scope of the presented question widget;
- Final Touch Down Time Stamp: the time when the responder initiates the interaction with the question widget that results in providing the explicit answer that the question widget was designed to collect (determined by selecting the last touch down event/gesture preceding the final touch up event/gesture that completes the responder's interaction with the question widget);
- Final Touch Up Time Stamp: the time when the responder completes interaction with the presented question widget (e.g., the end of gesture) that results in completing the question answering interaction (or skip) for which the question widget was designed;
- Last Visible Time Stamp: the earliest time indicating when the question widget is no longer visible to the responder after having been successfully presented;
- Number of Touches: the number of times the responder makes contact with the mobile device screen while a question widget is being presented;
- Question Administration Count: the number of times the question widget has been presented to the responder;
- Question Skip Count: the number of times a question was actively skipped by the responder;
- Ignore Count: the number of times the presented question widget timed out or was otherwise dismissed from being presented to the responder based on lack of explicit responder interaction; and
- Location, Speed and Bearing as well as Accuracy and Provider data at the time the responder completes the question widget request.

### Developing and Defining a Set of question widgets as a Survey that can be Deployed to a Large Number of Potential Responders

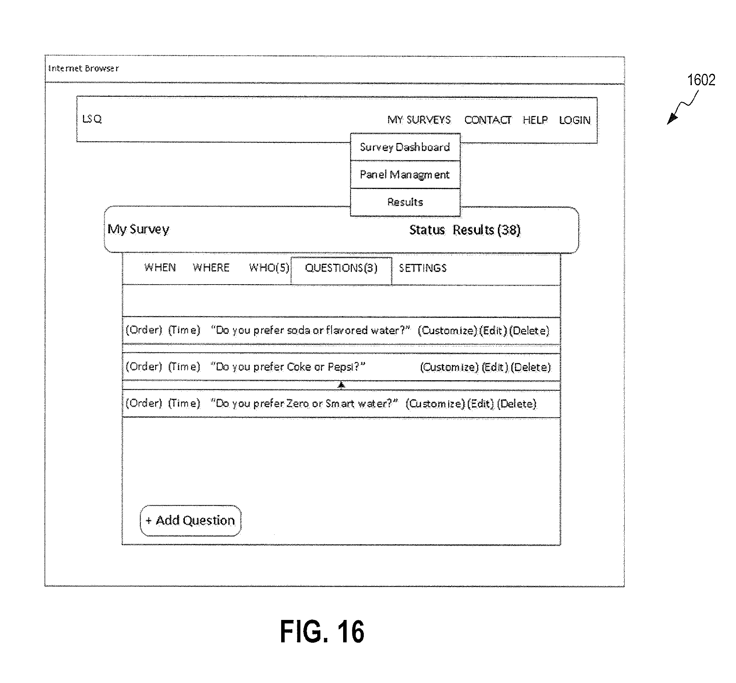

For various embodiments, a multi-question survey may be implemented using a related set of question widgets defined by the asker and sent to one or more responders. FIG. 16 shows an example of a tool embodied as a web-accessible interface 1602 for constructing surveys. For the purposes of this disclosure, a survey is defined as a set of one or more questions, which are defined as question widgets, examples of which are described in detail above. Parameters are defined that apply to all question widgets in the survey, e.g., its valid time frame to be administered, a unique client (asker) identifier, unique survey identifier, and priority.

A dependency graph is defined that indicates whether a particular question widget or set of question widgets should be presented to the responder based on the completion of one or more other question widgets. This helps to define an execution ordering for question widgets. The answer to a question may result in a change in the order of subsequent questions asked from the list, including the possibility of not asking one or more questions in the list. Each question has contextual parameters associated with it that define the desired environmental context of the responder when answering. Contextual parameters were discussed earlier in this specification and include examples such as the date, time of day, gross geographic location, detailed proximity, physiological conditions, and biometrically verified identity of the responder.

Each question may have a set of one or more specific micro-interaction events in which it is intended to be presented to the responder via the mobile device. Examples of micro-interaction events were defined and described above that included examples such as the lockscreen or keyguard screen, app Entry/Exit, and other platform-specific and app-specific micro-interaction events. Each question may have contextual parameters specified to be collected indirectly from the responder during attempts to be answered and when finally answered. Contextual parameters were discussed earlier in this specification and include examples such as the date, time of day, gross geographic location, detailed proximity, physiological conditions, and biometrically verified identity of the responder.

### Administration of the Survey on the Responder's Computing Device

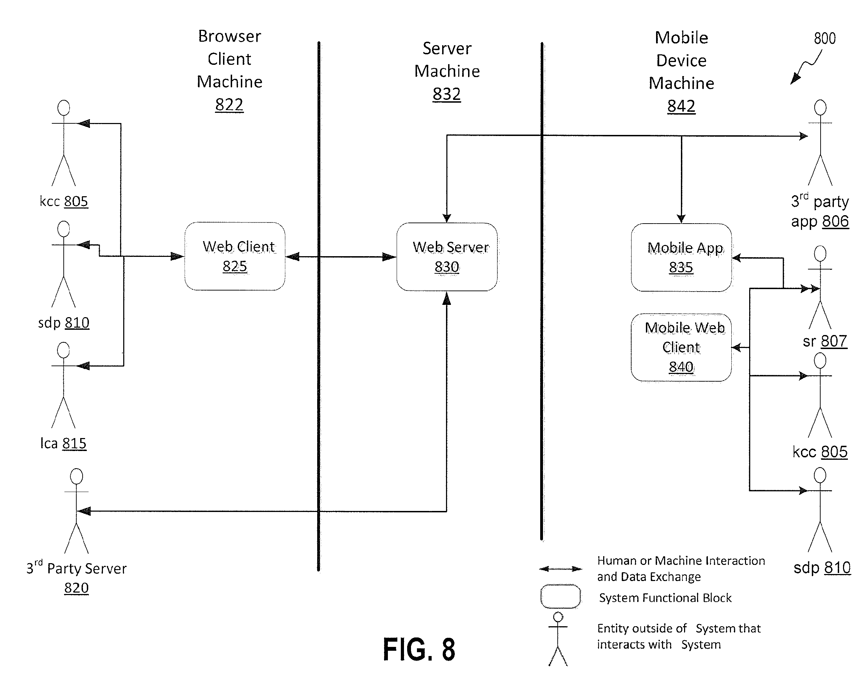

Once the asker has designed a survey and a set of responders have been identified to deploy the survey, the survey is distributed to each of the responders' mobile devices. FIG. 8 illustrates a block diagram of the end-to-end system 800 of a mobile device question administration system for implementing the question administration techniques disclosed herein. The web client 825 is executed on a browser client machine 822 and incorporates a web portal for setting up customer accounts, performed by the client admin role 815, and identifying their responders, indicated by responders 807. The web client 825 is utilized to create question widget based questions and answers (a survey) to be sent to the mobile app for presentation to the responders. The web client 825 is also used to display the progress to key customer clients 805 of question widgets response rates from the responder(s) 807, showing how many responses have been received and potentially providing access to the responses via access to the web server 830 discussed below. The web client 825 can be utilized on mobile, desktop, or laptop web browsing clients or mobile web apps. The mobile interaction is depicted in FIG. 8 as the key customer client 805 interaction with the mobile web client 840.

The mobile app 835 for displaying question widgets executes on a mobile device machine 842 and is responsible for presenting the question widgets as guided by the question widget's contextual parameters in the available responder micro-interaction events or directly in the app interface or third party app interface. The mobile app 835 is responsible for getting user's opt-in compliance and responder profile data.

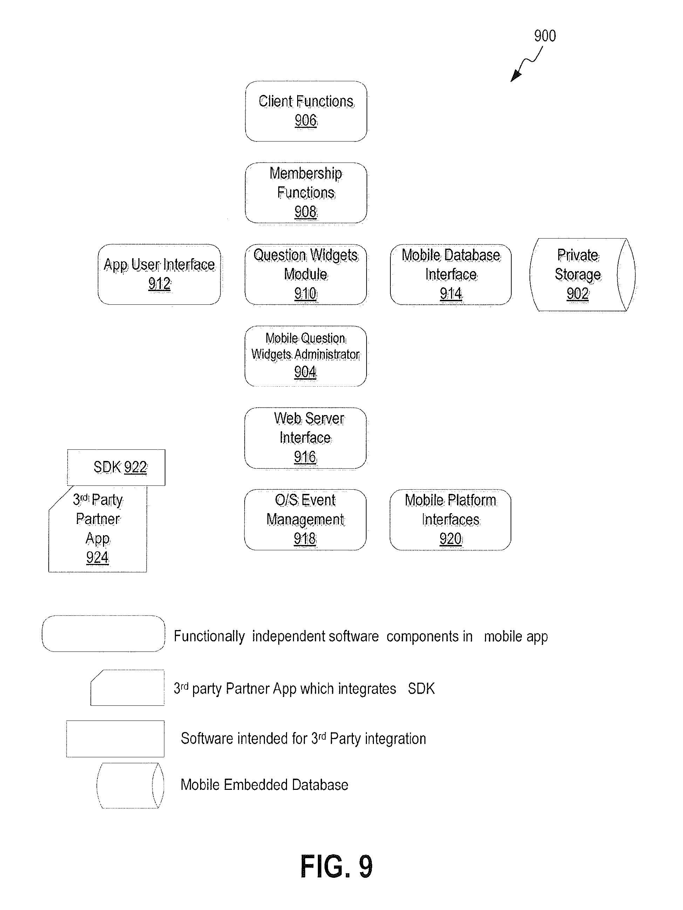

As described further below in connection with FIG. 9, the mobile app 835 manages local administration of question widgets during micro-interaction events using its mobile question widget library and the contextual parameters. It also provides an application programming interface (API) to third party mobile apps for the same functionality. The mobile app 835 also communicates with a Web server (830) on a server machine 832 for mobile app user management and question widget transmission, reception, and administration. The mobile app 835 maintains a local database of active question widgets content and current responses not already off-loaded to the web server (830). The mobile app 835 also provides the mobile app user's opted-in passive data collected by the mobile device 842, which includes location and other contextual parameters as described elsewhere.

The mobile web client 840 corresponds to a mobile responder web client and provides a web interface for serving question widget-based surveys via alternative web technologies than a native mobile app with a similar mobile survey administration as performed by the mobile app 835. In this case, mobile survey administration can be performed either on an external system, such as the web server 830 or some 3^{rd} party server 820, or on the mobile device machine 842, or some combination of those external and internal systems.

The web server 830 executing on a server machine 832 manages the relationships between askers 805 and 810 and responders 807. The web server 830 ensures proper deployment of question widgets from askers to responders and provides a means for askers or responders to view aggregations of question widget questions and answer activities and related contextual data collected by the mobile app during the responders' interactions with presented question widgets.

The web server 830 provides an API to third party partner servers 820 running the client app to also manage askers and responders using question widgets and the mobile app 835 or the third party partner's own mobile app 806, which has integrated the mobile app software development kit (see SDK 922 in FIG. 9). The web server 830 also provides contextual reference data for the question widgets created by the asker, such as geographical location areas for which the question widget is intended to be presented. Other question widget parameter data described later in this specification will also be facilitated by the web server to aid the asker in creating the question widgets via the web client 825 or the mobile web client 840.

The web server 830 comprises a subsystem responsible for significant functionality regarding the mobile survey platform. The subsystem provides the majority of web services to the customer web client 825 to enable survey development and mobile respondent selection. Additionally, the server manages responder accounts and question widget question publishing from the askers to the responders. The web server 830 subsystem either implements directly or integrates with a third party provider in order to acquire and manage relationships between askers and responders. Additionally, qualified third party partner web servers 820 can utilize the public web services and web question widgets to manager their own askers and responders that wish to utilize question widgets to communicate distributing the question widgets through the mobile app 835 or third party mobile app 806 with the SDK (see SDK 922 in FIG. 9), or through another web client presentation technology.

The web server 830 comprises such components as key customer contact (KCC 805) account management, question authoring, responder management and question publishing/reporting. The KCC account management handles the secure account information and payment information as well as managing additional users within the account. Question authoring provides the necessary services to build and store the question info, question widget-based question parameters, responder identification and mobile administration parameters. Responder management provides some form of managed and organized access to one or more responders for the asker to choose from for communication with the question administration technology disclosed herein. The asker can use this functionality to build a unique community of their desired responders.

The question publishing/reporting component of the web server subsystem publishes askers' questions to the responders according to the questions' schedule administration data, manages responder fulfillment with responder manager, generates a survey data stream, generic or unique, and manages transmission to responders. The system also collects survey results and provides status reporting to KCC account users. The question administration system interfacing entities includes a KCC entity 805, an asker/survey designer/programmer (SDP) 810, a responder (SR) 807, a client administrator (Ica) 815, third party app 806, and a third party server 820.

FIG. 9 illustrates a block diagram of a question administration system 900 in which embodiments of the survey administration techniques disclosed herein may be implemented. For some embodiments, the survey administration system 900 is incorporated as part of the mobile app 835 in FIG. 8. The operating system (O/S) event manager 918 handles integration into the mobile O/S for identification and trapping of micro-interaction events of interest to the mobile question widget administration 904. The mobile platform interfaces component 920 manages all interfaces to the mobile device's contextual sensor hardware drivers or interface software. Any necessary data or useful processing methods are part of this subsystem. For example, code for customizing global positioning satellite (GPS) sensor functionality and custom camera sensing control would be managed by the mobile platform interface 920. Furthermore, all sensor data intended for question widget administration is captured through the mobile platform interfaces component 920.

The web server interface 916 handles all communications back and forth to the web server 830 (FIG. 8) for question widgets and question widget streams (related set of question widgets as in a survey). The management of disrupted communications is also included as well as managing communication hardware on the mobile device pursuant to the responder's settings, such as use of cellular data plan or WIFI data connection. The web server interface 916 informs the question widget administrator 904 of arrival of the question widgets from the web server 830 (FIG. 8) and is informed by the mobile question widgets administrator 904 when question widgets have been sufficiently interacted with, or otherwise ready to return to the web server 830 (FIG. 8). The web server interface 916 also packs and unpacks data communication streams for receiving and transmitting question widgets to/from the web server 830 (FIG. 8).

The mobile database interface 914 stores received question widgets and their parameter payloads. Upon receipt of a question widget stream, the web server interface 916 unpacks the data to private storage 902 on the mobile device. Upon notification from the mobile question widget administrator 904, the web server interface 916 serializes question widget data from the private storage 902 to transmit back to the web server 830 (FIG. 8). Any multimedia or context sensor question widget parameter data is also stored either in private storage 902 or on the available local mobile file system. This type of data is also received and transmitted to and from the web server 830 by the Web Server Interface 916.

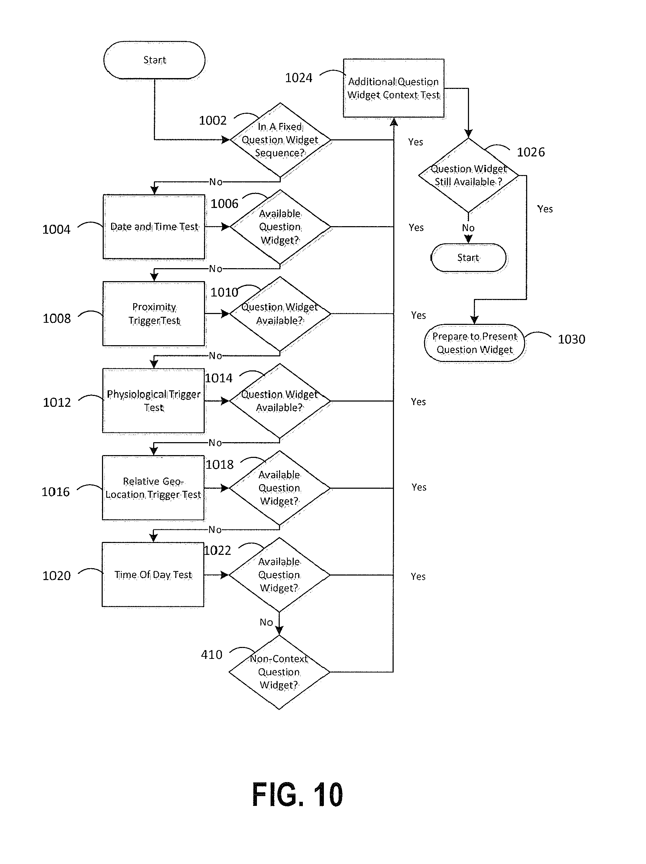

The mobile question widgets administrator 904 handles the main question widget presentation functionality and its functionality is detailed below in connection with FIGS. 10-13. In summary, all functionality needed to determine when a question widget is presented (time of day, calendar day), where a question widget is presented (proximity and geographic location), if the desired physiological conditions of the responder are met to present the question widget, and setting up the question widget to be presented during the correct micro-interaction event. Additionally, the mobile question widgets administrator 904 validates if the the current responder using the mobile device is the intended recipient of the question widget to be presented.

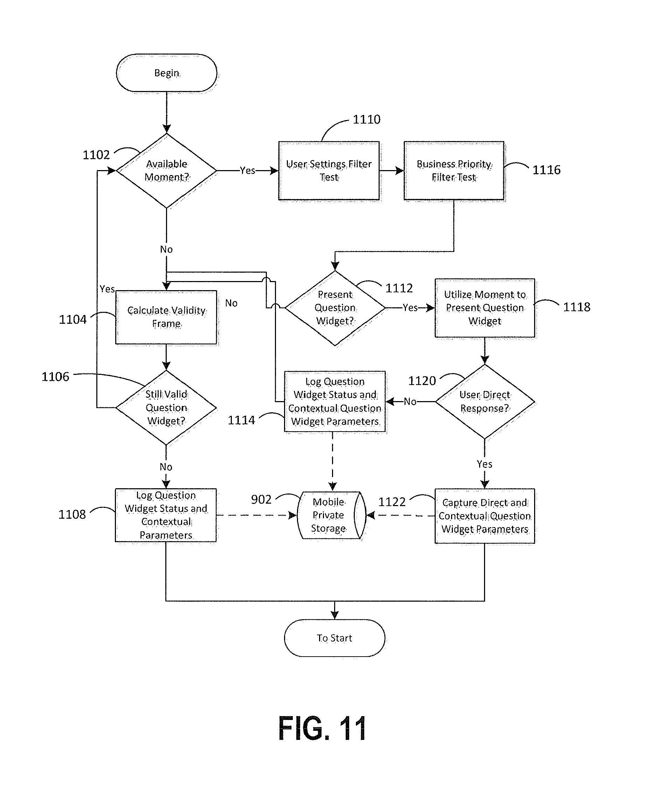

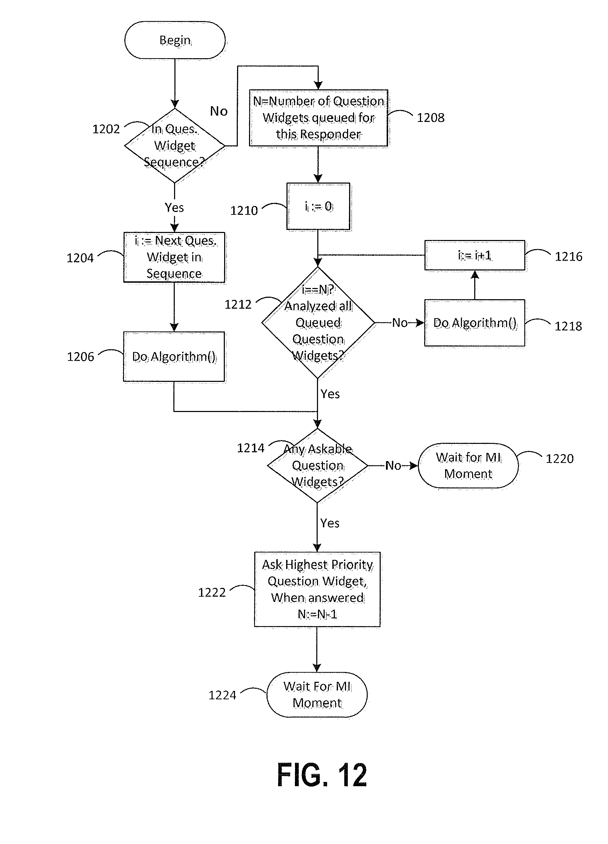

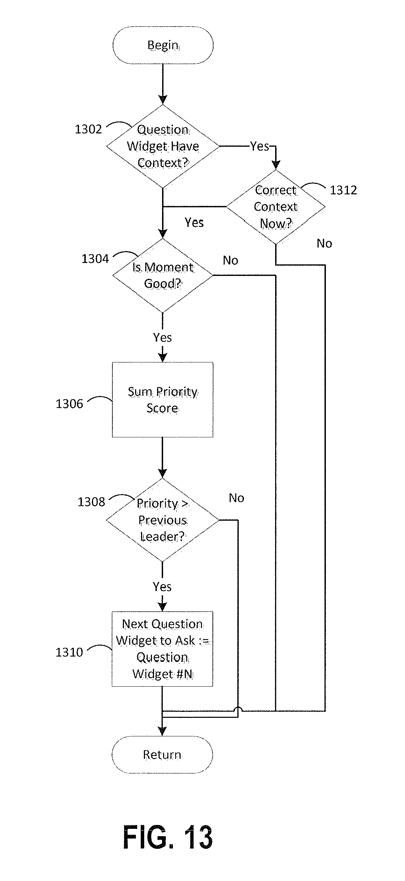

The mobile question widget administrator 904 also performs the following functions:
- Schedule Question widget - software to perform the tasks of setting up a Question widget to be presented in a desired micro-interaction event once it has been determined the Question widget is "next" to be presented, as determined by the general strategy described in connection with FIGS. 10 and 11 or the embodiment in FIGS. 12 and 13. Any functionality to be provided to the UI Subsystem 912 to capture contextual sensor data as well as other direct multimedia data may be facilitated by this component too.
- Schedule Administration - manage calendar date and time analysis for pending question widgets
- Proximity Admin - manage proximity sensor and context analysis for pending question widgets
- Location Admin - manage gross and fine GPS location triggering for pending question widgets
- Physiological Admin - manage the Respondents' physiological conditions for pending question widgets
- Responder Constraints - filter question widget administration to concur with a responder's desired user settings
- Business Prioritization - manage competing question widget administration and client contextual urgency
- Moment Registration - coordinate usage of micro-interaction events with the O/S event manager 918 to ensure proper scheduling and system event registration for presenting a scheduled question widget upon the proper O/S or third party app micro-interaction event.

The question widgets module 910 reconstructs the software objects from the data question widget previously stored in private storage 902 through the mobile database interfaces 914. This component 910 then provides a list of questions in a data structure to the mobile question widget administrator 904 for it to perform the administration management of presenting questions to the responder. When a question widget/question is ready for presentation, the app user interface 912 will utilize the question widgets' functionality to construct the software graphical information and acceptable user input software descriptions in order for the app user interface 912 to properly configure the mobile device's graphical touch screen and other input sensor devices required to interact with the responder.

The question widgets module 910 performs question widgets construction and builds the visual and interactive question widget from the UI recipe either dynamically from descriptors provided by a question widgets software component, or from information defined by the mobile operating system O/S device input and output controllers. Based on event signals coordinated via the O/S event manager 918 and the mobile question widget administrator 904, the app user interface 912 presents the question to the responder via the mobile device's user interface modalities and sensors. This app user interface 912 presentation of the question widget must play the interactive graphical animations, defined interactive behaviors and other characteristics of the question widget as embodied in definitions held in software that is part of question widgets.

The app user interface 912 captures the direct response of the responder's interaction with the question widget as presented on the mobile devices interface modalities and sensors. This response information as well as other contextual sensor information at the time of question widget presentation and response is captured by the app user interface 912 and the mobile platform interface 920 and stored in data structures of the question widgets module 910, which utilizes the mobile database interface 914 to add the data to the private storage 902 for later transmission to the web server 830 (FIG. 8) via the web server interface 916.

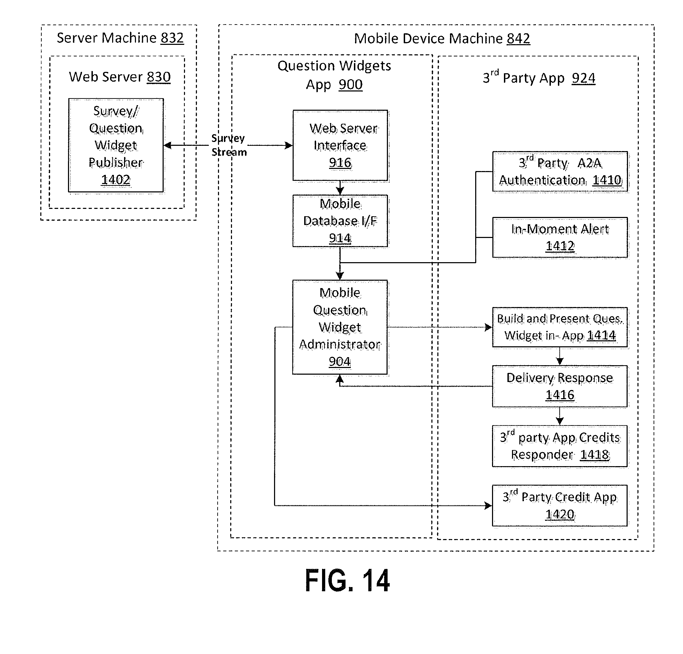

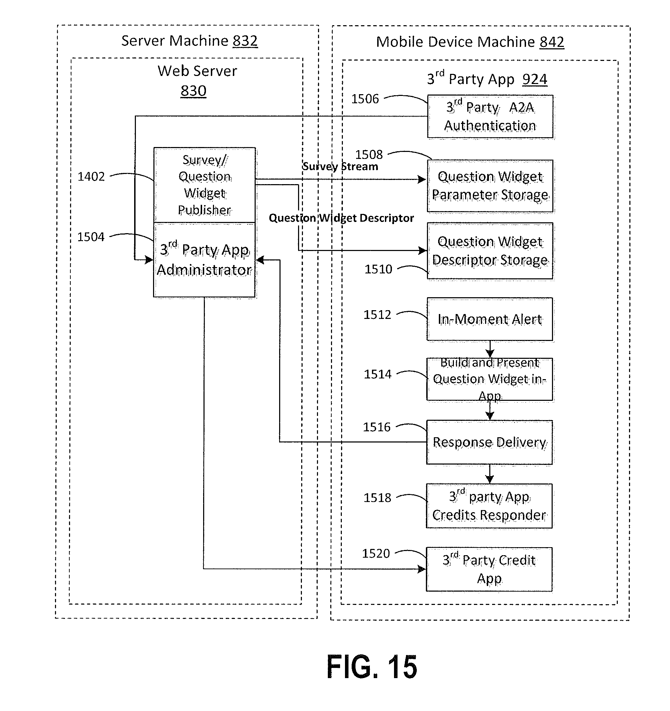

The membership functions module 908 provides in-app functionality for responders to configure the mobile app user settings as well as to set up and check their own account status, such as account balance or status of pending questions. The client functions module 906 is intended for a class of users that are askers and that have set up subscription accounts with the question administration framework disclosed herein to send many question widgets and question widget streams to a managed set of responders. The functionality provided by the client functions module 906 allows them to manage their client account via the mobile device and check on the status of question widgets they have published to responders. The SDK library 922 shown provides the necessary library software for inclusion into a third party partner app 924 for interfacing with either (or both) the installed mobile app 900 or web server 830 (FIG. 8) for receiving question widget information for presentation to the 3d party partner app's users as responders. The third party partner app 924 interactions are further described in connection with FIGS. 14 and 15 below.

The goal of the mobile device survey administration is to manage the presentation of one or more question widgets from one or more askers or surveys on the responder's mobile device. Therefore, this administration function determines which question widget to present during a micro-interaction event. This function may be performed by a combination of mobile and server-based computing but comprises the coordination of the following elements.
Configurable Responder settings:
- Responder time of day question widget allow/disallow periods
- Responder desired question widget disturbance frequency setting
- Other Responder configurable settings
For all question widgets intended for Responder:
- Evaluate Responder context as defined earlier in this specification and roughly according to the following priority:
   o Date and time specific question widget parameters satisfied
   o Proximity parameters satisfied
   o Physiological parameters satisfied
   o Relative movement to Geo location parameter satisfied
   o Time of day satisfied

The presentation of the next queued question widget is also dependent upon the type of the next micro-interaction event.

### Administration of Question Widgets and Surveys on Responder's Mobile Device

Once a survey has been sent to a responder's mobile device, the survey needs to be administered, along with all other question widget-supported surveys on the device. This administration activity determines which question widget to present to the responder at any pre-defined micro-interaction event. All of the question widgets belonging to surveys deployed on the responders' device are stored in the Mobile Private Storage database 902 and are accessed through the question widget's software component. The functionality described here is in the Mobile Question Widgets Administrator 904.

Reference is made to FIGS. 10 and 11, which depict flow diagrams for the general algorithm performed by the mobile question widgets administrator 904 (FIG. 9) on a responder's mobile device. FIG. 10 illustrates the question widget selection process. As shown, the set of available question widgets on the responder's mobile device is examined, first to determine if any predefined ordering of question widgets exists based on past question widgets the responder has answered, and then to determine a priority ordering for question widgets based on an ordered search by various contextual parameters, and then non-contextual parameters, to determine if there is an available question widget to be presented to the responder. This results in a question widget that, based upon its contextual parameters (or lack of contextual parameters) is ready to be presented, and the system is then ready to present the question widget to the responder during the next available appropriate micro-interaction event.

In block 1002, a test is first performed to determine if the current question widget has been bound by the asker to be in an uninterrupted set of question widgets, if so then this question widget is designated as the next presented if the context is ready and additional question widget context tests are performed (block 1024). If there is not a fixed question widget sequence, then in block 1004, the date and time context information are gathered and a test is performed on the list of available question widgets (block 1006) to determine if this current context matches any context of available question widgets. If so, the process proceeds to additional question widget context tests in block 1024. In blocks 1008 and 1010, tests are performed to determine if there is a proximity signal available to the mobile devices proximity sensor and a determination is made on whether an available question widget requires that proximity. If so, proceed to block 1024.

In blocks 1012 and 1014, tests are performed to determine the physiological status of the responder currently holding the mobile device or being measured by the mobile device's physiological sensors. A determination is then made on whether an available question widget requires this physiological state(s) of the responder. If so, proceed to block 1024.

In blocks 1016 and 1018, geographical location testing is performed relative to boundaries supplied by the asker for various question widgets. If the gross location of the mobile device meets the geographical location boundary and relative location movement to the boundaries, then that question widget(s) is used for subsequent testing in 1024.

In blocks 1020 and 1022, a determination of the current time of day for the current location is made and a test is performed to determine if that context is appropriate for any available question widgets. If so, proceed to block 1024.

In block 1026, a determination is made on whether any question widgets are still available. If not, then the process returns back to the beginning of the flow chart. In block 1024, if a question widget or question widgets were passed on to this point, then the specific question widgets identified as meeting a single context shall have their remaining context requirements (if any) tested and if the question widget still meets all its context requirements (block 1026), then proceed to block 1030, where the question widgets are presented.

FIG. 11 describes the logic flow from the time when a question widget has been initially identified as the next question widget to be presented to the responder 1030 (FIG. 10) to the presentation and interaction by the responder during an appropriate micro-interaction event. The system waits for the next available micro-interaction event 1102 (which may be platform-specific or app-specific). As time passes and no micro-interaction event arises, it may be the case that the question widget to present should change. The system determines whether the currently selected question widget is still valid to be presented (block 1106). If not, the question widget selection process described above in connection with FIG. 10 is restarted.

If the question widget is still appropriate and a micro-interaction event is detected, responder 1110 and asker preferences 1116 are checked to see if the selected question widget is appropriate for this micro-interaction event 1112. There could be both responder preferences and business priority preferences of the asker or related party that could rule out presenting the selected question widget during that micro-interaction event. At this point, the question widget presentation is either postponed and its validity frame is again verified, or the question widget is presented on the mobile device. If the question widget is presented, then appropriate information is captured and stored based upon whether or not the Responder completed the request.

In block 1102, a determination is made on whether an available micro-interaction event exists for presenting the question widget. If the moment is available, then in block 1110 a user settings filter test is applied to determine if the user has added any explicit setting parameters that limit their availability to presented question widgets. In block 1116, a business priority filter test is applied to determine whether there is a business priority situation that would block the current question widget from being presented in favor of another question widget.

In block 1112, if there is no user setting or business priority issues blocking the presentation of the question widget, then in block 1118, the mobile administrator will utilize other aspects of the mobile app to present the question widget to the responder on the mobile devices UI devices and sensors. In block 1120, the user responds and performs the task requested by the question widget. If the user provides a direct response, then proceed to block 1122 otherwise proceed to block 1114. In block 1122, the administrator utilizes other pieces of the mobile app to log the responders direct response as well as capture contextual information about the response from the mobile devices sensors and other contextually relevant information sources and store this information in the mobile private storage 902 (FIG. 9). The process then returns back to the beginning of the flow chart in FIG. 10.

In block 1114, if the question widget was presented but there was no direct response from the responder, then the contextual information about the attempted completion and presentation of the question widget are logged into the mobile private storage, and the process proceeds to block 1104. In block 1104, tests are performed on the question widget that was selected to be presented but was prevented from actually being presented because of the user settings filter test or the business priority filter test. Alternatively, the question widget being tested in block 1104 may have been presented but did not yield a response from the responder but still has valid contextual parameters. In the latter scenario, the process proceeds back to block 1102 to begin the process of attempting to present the question widget again.

In block 1108, the question widget status and contextual parameters are logged. If the available question widget to be presented, but was either not presented or presented but not answered, and it no longer has valid context then the available contextual information about the failed attempt is saved to the private storage 902 (FIG. 9) and the process returns to the beginning of the flowchart in FIG. 10.

Reference is made to FIG. 12, which depicts a flowchart for an O/S specific question widget administration. The embodiment depicted utilizes the available micro-interaction event to drive the process of finding and presenting the most appropriate question widget. The most appropriate question widget is determined by a measurement of relative priority among the existing question widgets to be presented. Upon the availability of a micro-interaction, the process flows to block 1202. If the system is in the middle of presenting a subset of question widgets in which the asker has specified they must occur strictly sequentially, then the iteration variable is increased to the next question widget in the list (block 1204) and the process proceeds to contextual evaluation in block 1206.

In block 1208, the administrator sets a variable to hold the number of question widgets in the queue to be presented to the responder. In block 1210, an iteration variable is reset to assist in counting the iterations through the list of question widgets to be tested for presentation. In block 1212, a test is performed on the iteration variable to determine if all question widgets have been tested. If all the question widgets have been tested, then the process flows to block 1214, otherwise the process flows to block 1218. In block 1214, a determination is made on whether there are any presentable question widgets. If so, then proceed to block 1222, otherwise wait for the next micro-interaction event.

In block 1222, the highest priority question widget is presented to the responder and the number of available question widgets is reduced by 1 if the question widget is answered. In block 1224, the system waits for the next available micro-interaction event. In blocks 1218, the algorithm described below in connection with FIG. 13 is executed to determine the priority score of the next question widget in the list of available question widgets being iterated through. In block 1216, after the algorithm in FIG. 13 has been executed, the iteration variable is incremented by 1.

Reference is made to FIG. 13, which is a flowchart for performing priority and contextual evaluation for a next question widget in the list of available question widgets to be presented to a responder. In block 1302, a determination is made on whether the question widget has any specified contextual parameters constraining its presentation. If so, then proceed to block 1312, where a determination is made on whether the question widgets contextual parameters are met as determined by collecting said contextual information from the mobile devices sensors or otherwise appropriate means to determine the current contextual state(s). If the contextual constraints are not met, then the process returns to block 1206 in FIG. 12.

In block 1304, a determination is made on whether the current micro-interaction event is appropriate for the current question widget. If not, the process returns back to block 1206 in FIG. 12. If the micro-interaction event is appropriate, then proceed to block 1306, where the priority score of the question widget is summed, where this represents a numeric value that considers the question widget's contextual constraints, preferred micro-interaction event, and other appropriate details to compute a relative priority to rate the question widget.

In block 1308, a determination is made on whether the priority for the current question widget is greater than the priority of the previously determined highest priority question widget. If the priority is greater, then the current question widget is moved to the position of next question widget to be asked, and the process returns to block 1206 in FIG. 12. In block 1310, the next question widget is processed.

Reference is made to FIG. 14, which illustrates third party app development and use of question widgets on a mobile device. The web server 830 on the server machine 832 comprises a survey/question widget publisher 1402, which represents software functionality on a server remote from the mobile device and connected via appropriate Internet networking technology and protocols. This publisher 1402 associates askers and responders and transmits the askers' questions to the responder's mobile device via the survey (question) stream. Additionally, the publisher 1402 is responsible for collecting the responder's result of interacting with the question widget.

The web server interface 916 of the question widget app 900 on the mobile device machine 842 communicates with the web server 830 to send and receive questions and responses from the mobile device. When the web server interface 916 receives a stream from the web server 830, the web server interface 916 places those questions in a suitable question widget form in to the private storage 902 (FIG. 9) on the mobile device. When questions have been presented and the response has been collected, or otherwise determined completed, the web server interface 916 transmits the responses back to the web server 830 via the survey/question stream.

The mobile database interface 914 provides a means to store the questions and answers received from the web server 830 and collected from the responder in secondary storage on the mobile device. The mobile question widget administrator 904 determines the next question widget to present to the responder as detailed above in FIGS. 10-13. In the case where a third party application identifies an available micro-interaction event, the question widget administrator 904 will provide the information about the next available question widget to the third party application so it may perform the presentation of the question widget to the responder while the responder remains inside the third party application, or otherwise transitions to or from the third party application.

In the third party app 924, the third party app-to-app (A2A) authentication module 1410 performs authentication of the mobile app so that its presence is known and that it is valid to be able to accept questions/question widgets to be presented to the responder by the third party application. The in-moment alert module 1412 generates a signal from the third party application to inform the mobile administrator 904 that the third party application has an available opportunity to present a question/question widget to the responder using the mobile device.

The build and present question widget in-app 1414 receives question/question widget data from the mobile administrator and utilizes other software with the provided SDK 922 (FIG. 9) to construct and present the question to the responder. The delivery response module 1416 in the third party app 924 returns to the mobile administrator 904 the results of presenting the question/question widget to the responder. This includes direct parameters and contextual parameters collected by the SDK 922 or otherwise by the third party app 924. The third party credits, module 1418, credits the responder's account, and the third party credit app, module 1420, credits the third party app account.

Reference is made to FIG. 15, which represents the scenario where the third party partner app is present on the mobile device but where the mobile app 900 (FIG. 9) is not present on the mobile device. In this scenario, the SDK 922 (FIG. 9) provides a means to get question widgets to present to the responder directly from the web server 830 (FIG. 8 and also FIG. 15).

The web server 830 on the server machine 832 contains additional software in the third party app administrator 1504 to handle question/question widget administration directly to third party partner apps on mobile devices. The survey/question widget publisher 1402 provides the survey/question stream to the third party app 924, but supplies additional information about the question widgets for presenting the question to be utilized by the SDK 922 provided to the 3d party app and presented on the mobile device machine 842 receiving the stream.

The third party app administrator 1504 receives authentication from the third party app and approves its authentication for presentation of questions/question widgets. The third party app administrator 1504 receives the result of presenting the question to the responder from the third party app and modifies the available list of questions for the third party app accordingly, providing this list to the publisher 1402 to send an updates stream to the third party app.

The third party A2A authentication module 1505 on the mobile device 842 authenticates itself to the web server to validate that it can present questions to the responder, thus opening up the communications path to the web server 830. The question widget parameter storage 1508 receives one for more questions to be presented to the responder using the SDK 922 (FIG. 9) or other suitable means. The question widget descriptor storage 1510 receives description information about the question widgets to be utilized to present the questions. This information provides the user interface interaction and touch screen graphical and input output modality configurations for the SDK 922 to utilize in presenting the question.

The in-moment alert module 1512 generates a signal upon a determination of an available micro-interaction event to utilize for presenting a question. In particular, this signals the mobile administration (present in the SDK 922) of the opportunity to present a question widget. The build and present question widget in-app 1514 provided to the third party app via the SDK 922 builds the presentation form of the question from the data received from the web server 830 and presents the question to the responder. The delivery response module 1516 transmits the result of presenting the question to the responder to the web server along with appropriate contextual information collected from the mobile devices sensors or otherwise appropriate means. The third party app credits responder 1518 applies a credit to the responder's account for performing the task depending upon the result of presenting the question to the responder. The third part credit app 1520 credits the third party app partner account depending upon the result of presenting the question to the responder.

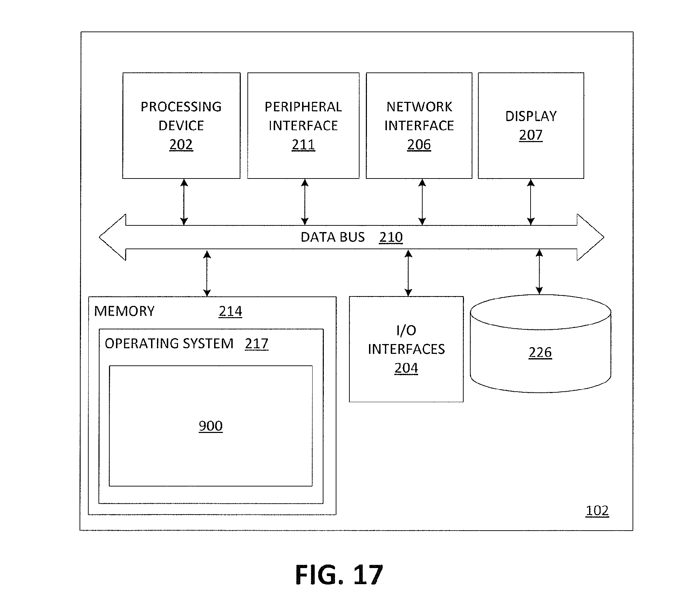

FIG. 17 is a schematic diagram of a mobile computing device 102 in which embodiments of the question administration techniques disclosed above may be implemented. The mobile computing device 102 may be embodied in any one of a wide variety of wired and/or wireless computing devices, such as a smartphone, tablet computing device, and so forth. As shown in FIG. 17, the mobile computing device 102 comprises memory 214, a processing device 202, a number of input/output interfaces 204, a network interface 206, a display 207, a peripheral interface 211, and mass storage 226, wherein each of these devices are connected across a local data bus 210.

The processing device 202 may include any custom made or commercially available processor, a central processing unit (CPU) or an auxiliary processor among several processors associated with the mobile computing device 102. The memory 214 can include any one of a combination of volatile memory elements (e.g., random-access memory (RAM, such as DRAM, and SRAM, etc.)) and nonvolatile memory elements (e.g., ROM, hard drive, CDROM, etc.). The memory 214 typically comprises a native operating system 217, one or more native applications, emulation systems, or emulated applications for any of a variety of operating systems and/or emulated hardware platforms, emulated operating systems, etc.

The applications may include application specific software, which may comprise some or all the components depicted in the question administration system 900 of FIG. 9. In accordance with such embodiments, the components are stored in memory 214 and executed by the processing device 202. One of ordinary skill in the art will appreciate that the memory 214 can, and typically will, comprise other components that have been omitted for purposes of brevity.

Input/output interfaces 204 provide any number of interfaces for the input and output of data. For example, where the mobile computing device 102 comprises a personal computer, these components may interface with one or more user input devices via the I/O interfaces 204. The display 207 may comprise a display (LCD), a touchscreen display, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical). With further reference to FIG. 17, network interface 206 comprises various components used to transmit and/or receive data over a network environment. The mobile computing device 102 may further comprise mass storage 226.

It should be emphasized that while embodiments of the question administration framework have been described in the context of administrating surveys, embodiments of the question administration system are not limited to surveys as the primary goal to motivate mobile device users to answer more questions. The question administration framework is generally most effective when the questions are short and easy to answer, and a great deal of valuable questions can be formed this way in a variety of application areas.

There is a large quantified self community that looks into the advantages of continuous monitoring of one's behaviors to help increase self-awareness of problems and induce behavior change. Self-monitoring has also been proven in the medical and preventative health community to help people self-reflect how their activities influence themselves. The questions may not be suitable for capturing the accurate weight for medical purposes. However, they can help collect a variety of coarse grain events that can supplement the other high-accuracy recordings. For example, a question can ask whether the person slept late the previous night or ate a heavy lunch. These simple yes/no responses may become surprisingly useful when aggregated over time and correlated with weight gain outcomes. There are numerous health applications that provide a way for a patient to provide health professional relevant information about how health management and knowledge, and using the techniques in this disclosure can allow opportunities to gather that information on a more continual basis. This is in contrast to a traditional approach of having the patient complete questionnaires on health management and knowledge before or during a scheduled appointment with a health professional.

The question administration framework may also be utilized for gathering market research. There is a large business dedicated to market research. Knowing how the consumers are currently thinking and what they are doing is critical for businesses to formulate their short-term and long-term strategic plans. Market research companies spend a great deal of resources making phone calls, mailing questionnaires or conducting online surveys to generate pages and pages of trend analysis and state of the market reports. Many of their questions are suitable for the techniques disclosed in this invention. Although the responses are not necessarily that rich by themselves and in isolation, when the right questions are asked and a certain population responds, the data become very valuable. The question administration framework can easily administrate this type of question and reach a large population of mobile device users. Therefore, we see a great potential for this invention in this industry.

Amazon Mechanical Turk (MTurk) opened the door for commercial crowdsourcing to let humans work on tasks that are still too complex for completely automated algorithmic approaches. In the area of crowdsourcing, common tasks include named entity annotation, common sense responses, natural language annotation, opinions, etc. The size of the tasks can go from small to large and pay differently. As questions in embodiments of the invention should be short and simple to fit on the mobile device and occur during micro-interaction events, the embodiments of the invention are not complete replacements for a solution like MTurk. Rather, embodiments of the invention may be able to attract a more diverse workforce to accomplish simple task that appear on MTurk (and potential ones that do not appear on MTurk) because of its seamless integration with the workflow of mobile device users.

Moreover, the question administration architecture by definition is implemented on the users' mobile phones so it is a particularly promising platform for mobile crowdsourcing. Mobile phones have the advantage of being a good proxy of where the user is. Therefore, crowdsourcing tasks can be assigned based on the user's location or locale configuration on their phones. Additionally, there is a plethora of sensors built-in or connectable to the mobile devices. These extra pieces of contextual information can be used to better formulate, deliver, and answer questions for mobile crowdsourcing.

The question administration framework may also be utilized for remote health monitoring. Many times, elderly and pediatric care requires additional caregivers or health care providers. Remote health monitoring systems can collect real-time health status information from the patients and alert the relevant caregivers in case of an event. For less acute aspects of the condition, technologies such as Health Buddy are able to administer daily multiple choice surveys to collect them. The responses are sent to the health care providers for them to make more informed decisions for the patients. The question administration framework disclosed herein is suitable for this type of system. By answering a few simple questions a day, patients can ensure that their caregivers and health care providers know more about how they are doing beyond the standard clinical outcomes. Moreover, patients can also benefit from the increased self-awareness of their conditions through answering the questions.

The question administration framework may also be utilized for micro-learning, which is a learning method where the knowledge is broken down into small chunks and learned discretely over time. It is particularly useful for learning the vocabulary of a new language because each word in the new vocabulary is by nature a small piece of knowledge that can be tested. The question administration framework of this invention can be useful in supporting micro-learning by turning the target learning materials into small questions. For example, a question can be "What does the Spanish word 'tres' mean?" The answer can be a multiple-choice selection with possible English translations. Upon selecting an answer to unlock the phone, the correct answer will be shown as a fleeting notification. With a great deal of learning materials testable with multiple-choice questions, this could be a very promising application area for embodiments of the invention.

A great number of text messages on mobile phones are short direct questions asking for a response. For example, "Are we meeting at 3 today?" is a common type of question when the message sender wants to confirm a certain event. As there is currently no way for the sender to indicate the importance/urgency of the message, they often need to think twice before sending a simple question like this because it can be intrusive to the receiver. The question administration framework of this invention can provide a solution to this problem by providing a short, non-urgent question and answer system. If a user wants to confirm a meeting time with another person, he or she can put the question through the messaging system. The next time the receiver picks up his or her phone, the question will show up on the lock screen or during some other relevant micro-interaction event. Empirical evidence reveals that a typical user looks at their lock screen at least 40 times a day, providing a good chance that the message will be seen within an hour. This new type of communication system can potentially be a great alternative to existing mobile messaging systems, particularly if it is made easy to create or ask the question.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a mobile computing device for facilitating administration of questions, comprising:
obtaining a grouping of questions;
assigning at least one graphical element to each of the questions within the grouping and generating a grouping of interactive graphical elements;
prioritizing each of the graphical elements within the grouping of graphical elements; and
performing, responsive to detection of a micro-interaction event, the steps of:
selecting a graphical element among the grouping of graphical elements having a highest priority;
displaying the selected graphical element on a display of the mobile computing device;
obtaining a response based on manipulation of the displayed graphical element;
generating metadata according to the response; and
storing the response and the metadata in a storage device within the mobile computing device.

2. The method of claim 1, further comprising transmitting the response from the mobile computing device to a remote computing device.

3. The method of claim 1, wherein the micro-interaction event comprises rote interaction by a user with the mobile computing device.

4. The method of claim 3, wherein the rote interaction comprises the user attempting to unlock the mobile computing device via a gesture performed on the display, and wherein the mobile computing device is unlocked upon receiving the response.

5. The method of claim 1, wherein assigning at least one graphical element to each of the questions comprises:
determining a question type of each of the questions within the grouping of questions, the question type comprising one of an open question type or a closed question type; and
assigning at least one graphical element according to at least one contextual parameter, the at least one contextual parameter comprising the question type.

6. The method of claim 1, wherein prioritizing each of the graphical elements within the grouping of graphical elements is based on at least one contextual parameter.

7. The method of claim 1, wherein obtaining the response comprises obtaining via a touchscreen interface on the mobile computing device, a single continuous gesture.

8. A question administration system, comprising:
a computing device; and
at least one application executable in the processor, the at least one application comprising:
logic that obtains a grouping of questions;
logic that assigns at least one graphical element to each of the questions within the grouping and generating a grouping of graphical elements;
logic that prioritizes each of the graphical elements within the grouping of graphical elements;
logic that selects a graphical element among the grouping of graphical elements having a highest priority responsive to detection of a micro-interaction event;
logic that displays the selected graphical element on a display of the mobile computing device responsive to detection of the micro-interaction event;
logic that obtains a response based on manipulation of the displayed graphical element responsive to detection of the micro-interaction event;
logic that generates metadata according to the response responsive to detection of the micro-interaction event; and
logic that stores the response and metadata in a storage device within the mobile computing device responsive to detection of the micro-interaction event.

9. The system of claim 8, wherein the micro-interaction event comprises rote interaction by a user with the mobile computing device.

10. The system of claim 9, wherein the rote interaction comprises the user attempting to unlock the mobile computing device via a gesture performed on the display, and wherein the computing device is unlocked upon receiving the response.

11. The system of claim 8, wherein the logic that assigns at least one graphical element to each of the questions further comprises:
logic that determines a question type of each of the questions within the grouping of questions, the question type comprising one of an open question type or a closed question type; and
logic that assigns at least one graphical element according to at least one contextual parameter, the at least one contextual parameter comprising the question type.

12. The system of claim 11, wherein the at least one contextual parameter further comprises graphical attributes of the at least one graphical element.

13. The system of claim 8, wherein prioritizing each of the graphical elements within the grouping of graphical elements is based on at least one contextual parameter.

14. A method implemented in a computing device for facilitating administration of questions, comprising:
generating a grouping of questions for an intended responder, the intended responder comprising a user of a mobile computing device;
generating at least one graphical element for each of the questions within the grouping and generating a grouping of graphical elements; and
assigning at least one trigger event to each of the graphical elements within the grouping of graphical elements, the at least one trigger event corresponding to a micro-interaction event.

15. The method of claim 14, wherein the micro-interaction event comprises rote interaction by the user with the mobile computing device.

16. The method of claim 15, wherein the rote interaction comprises the user attempting to unlock the mobile computing device via a gesture performed on the display.

17. The method of claim 14, wherein each question has a corresponding question type, the question type comprising one of an open question type or a closed question type.

18. The method of claim 17, wherein the at least one trigger event is assigned to each of the graphical elements within the grouping of graphical elements according to at least one contextual parameter.

19. The method of claim 18, wherein the at least one contextual parameter comprises desired physiological conditions of the responder.

20. The method of claim 18, wherein the at least one contextual parameter comprises a time of day for presenting the graphical element.
